# EUROPEAN PATENT SPECIFICATION

(11) **EP 4 322 762 B1**
(45) Date of publication and mention of the grant of the patent: **09.12.2026**
(21) Application number: 22716980.2
(22) Date of filing: 12.04.2022
(51) Int. Cl.: A23K 20/105, A23K 20/111, A23K 20/179, A23K 50/10

(54) **USE OF GOSSYPOL AND A METHANE INHIBITOR FOR REDUCING THE FORMATION OF METHANE EMANATING FROM THE DIGESTIVE ACTIVITIES OF RUMINANTS**
VERWENDUNG VON GOSSYPOL UND EINEM METHAN-INHIBITOR ZUR REDUZIERUNG DER BILDUNG VON METHAN, DAS AUS DEN VERDAUUNGSAKTIVITÄTEN VON WIEDERKÄUERN ENTSTEHT
UTILISATION DE GOSSYPOL ET D'UN INHIBITEUR DE MÉTHANE POUR RÉDUIRE LA FORMATION DE MÉTHANE ÉMANANT DES ACTIVITÉS DIGESTIVES DES RUMINANTS

(30) Priority: 15.04.2021 EP 21168703
(43) Date of publication of application: 21.02.2024
(73) Proprietor: DSM IP Assets B.V., 6221 BE Maastricht (NL)
(72) Inventor: KINDERMANN, Maik, 4303 Kaiseraugst (CH); LETINOIS, Ulla, 4303 Kaiseraugst (CH); MONTEIRO TAMASSIA, Luis, Fernando, 4303 Kaiseraugst (CH); STEMMLER, René, Tobias, 4303 Kaiseraugst (CH); WALKER, Nicola, 4303 Kaiseraugst (CH)
(74) Representative: J A Kemp LLP
(86) International application number: PCT/EP2022/059716
(87) International publication number: WO 2022/218967

(56) References cited:
- EP-B1- 2 654 455
- WO-A1-2010/072584
- WO-A1-2012/084629
- WO-A1-2020/212348
- US-A1- 2020 229 465
- US-B2- 7 763 273
- ISMARTOYO: "The Effect of Various Concentrations of Gossypol on The Rumen Protozoal Degradation of Grass Hay in Culture", BULETIN PETERNAKAN, vol. 27, no. 3, 1 January 2003 (2003-01-01), pages 101 - 108, XP055943617, ISSN: 0126-4400
- THANG CHU MANH ET AL: "Combined Effects of Cottonseed Oil and Tannin from Tea By-Products (Camellia sinensis) Supplementation on Nutrient Digestibility, Performance and Enteric Methane Production of Fattening Cattle", ADVANCES IN ANIMAL AND VETERINARY SCIENCES, vol. 8, no. 6, 1 January 2020 (2020-01-01), XP055847685, ISSN: 2307-8316, Retrieved from the Internet <URL:https://nexusacademicpublishers.com/uploads/files/AAVS_8_6_633-638.pdf> DOI: 10.17582/journal.aavs/2020/8.6.633.638
- GRAINGER C ET AL: "Supplementation with whole cottonseed causes long-term reduction of methane emissions from lactating dairy cows offered a forage and cereal grain diet", JOURNAL OF DAIRY SCIENCE, AMERICAN DAIRY SCIENCE ASSOCIATION, US, vol. 93, no. 6, 1 June 2010 (2010-06-01), pages 2612 - 2619, XP027058422, ISSN: 0022-0302, [retrieved on 20100519]
- LIMA PAULO DE MELLO TAVARES ET AL: "Methane emission of Santa Inês sheep fed cottonseed by-products containing different levels of gossypol", TROPICAL ANIMAL HEALTH AND PRODUCTION, vol. 46, no. 1, 17 October 2013 (2013-10-17), Dordrecht, pages 285 - 288, XP055832554, ISSN: 0049-4747, Retrieved from the Internet <URL:https://link.springer.com/content/pdf/10.1007/s11250-013-0491-3.pdf> DOI: 10.1007/s11250-013-0491-3

## Description

The present invention relates to the field of reduction of methane emission in ruminants. Particularly, it relates to the administration of gossypol and a methane inhibitor to a ruminant for reducing the production of methane emanating from the digestive activities of said ruminant.

The present invention further relates to animal feed compositions and feed additives comprising a methane inhibitor and gossypol as well as the use of said feed composition or feed additives for reducing the production of methane emanating from the digestive activities of ruminants.

The temperature of the air surrounding the earth is increasing, a process referred to as global warming. One of the main focuses to reduce this warming effect is to reduce the amount of greenhouse gases emitted into the atmosphere. Greenhouse gases are emitted from several different sources, both natural and artificial; however, the two sources with the most emphasis are the agricultural and fossil fuel industries. Within agriculture, ruminants and in particular cattle are the major contributors to the biogenic methane formation, and it has been estimated that the prevention of methane formation from ruminants would almost stabilize atmospheric methane concentrations.

Methane emission from the ruminant livestock sector - a by-product from enteric fermentation of plant biomass in the ruminant digestive system - is produced by methanogenic archaea. Various attempts have been made in the last decade to mitigate methane production from ruminant animals. Although the approaches vary, the most popular method so far are feed additives which act in the rumen fluid by reducing respectively inhibiting the methane production by methanogenic archaea.

The term methane inhibitor as used herein relates to compounds suitable to reduce the methane emissions in ruminants (i.e. rumen methane inhibitors).

WO 2012/084629 A1 describes a method for reducing the production of methane emanating from the digestive activities of a ruminant and/or for improving ruminant animal performance by using, as an active compound at least one organic molecule substituted with at least one nitrooxy group, or a salt thereof, which is administrated to the animal together with the feed.

US 2020/229465 A1 describes the use of a feed composition or a feed additive comprising at least one fatty acid containing at least 5 carbon atoms and at least one organic molecule substituted at any position with at least one nitrooxy group, for reducing the production of methane emanating from the digestive activities of ruminants.

Thang et al., Advances in Animal and Veterinary Sciences, 2020, 8(6): 633-638, describes the combined effect of cottonseed oil and tannin from tea by-products *(Camellia sinensis)* supplementation on feed intake, digestibility, growth performance and enteric methane production on Brahman-Laisind crossbred fattening cattle.

Grainger et al., Journal of Dairy Science, 2010, 93(6): 2612-2619 describes a reduction in methane (CH₄) emissions (g of CH₄/kg of dry matter intake (DMI)) from lactating dairy cows over a 12-week period when whole cottonseed (WCS) is added to their diet.

Lima et al., Tropical Animal Health and Production, 2014, 46(1): 285-288 describes the effect of cottonseed by-products containing different levels of gossypol on enteric methane emissions in Santa Inês sheep.

WO 2020/212348 A1 describes a method of reducing methane emissions in ruminants, wherein the method encompasses treating pre-/young ruminants with 3-nitrooxypropanol.

WO 2010/072584 A1 describes a method for reducing the production of methane emanating from the digestive activities of a ruminant by using as an active compound: deoxycholic acid and/or chenodeoxycholic acid and/or a derivative thereof, which is administered to the animal.

US 2020/229465 A1 describes the use of a feed composition or a feed additive comprising at least one fatty acid containing at least 5 carbon atoms and at least one organic molecule substituted with at least one nitrooxy group, for reducing the production of methane emanating from the digestive activities of ruminants and/or for effecting ruminant performance.

Gossypol is a natural phenol of formula (I) 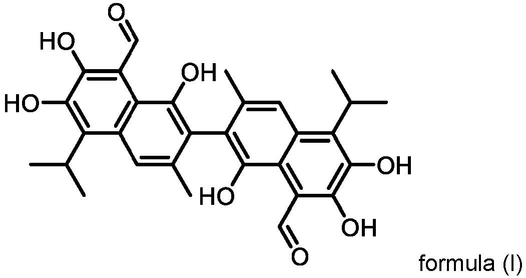 e.g. found in Indian tulip (genus Thespesia) plants.

Surprisingly, it has now been found, that the combined use of gossypol and a methane inhibitor leads to a synergistically reduced methane formation.

Thus, the combined use of a methane inhibitor and gossypol has a great potential in the mitigation of climate change by significantly reducing the methane emissions emanating during the digestive activities of ruminants.

Therefore, in a first embodiment, the present invention provides the use of gossypol and a methane inhibitor for reducing the formation of methane emanating from the digestive activities of ruminants, wherein the methane inhibitor is propanediol mononitrate and wherein the methane inhibitor is administered to the ruminant in an amount selected in the range from 0.01 to 100 g methane inhibitor/ animal/ day and gossypol is administered to the ruminant in an amount selected in the range from 0.05 to 100 g gossypol/ animal/ day.

In a second embodiment, the invention further provides a method for reducing the production of methane emanating from the digestive activities of ruminants, said method comprising orally administering to the animal an effective amount of gossypol and a methane inhibitor, wherein the methane inhibitor is propanediol mononitrate and wherein the methane inhibitor is administered to the ruminant in an amount selected in the range from 0.01 to 100 g methane inhibitor/ animal/ day and gossypol is administered to the ruminant in an amount selected in the range from 0.05 to 100 g gossypol/ animal/ day.

In a third embodiment, the present invention relates to a feed composition or feed additive comprising gossypol and a methane inhibitor, wherein the feed composition is a ruminant feed comprising gossypol in an amount selected in the range from 25 mg to about 10 g gossypol per kg dry matter feed and the methane inhibitor in an amount selected in the range from 1 mg to 5 g methane inhibitor per kg dry matter feed and wherein the methane inhibitor is propanediol mononitrate.

In a fourth embodiment, the present invention relates to the use of gossypol to enhance the methane reducing properties of a methane inhibitor in ruminants, wherein the methane inhibitor is propanediol mononitrate.

It is well understood, that gossypol and the methane inhibitor may be administered admixed together (i.e. premixed) or separately to the ruminant, while in the latter case it is well understood that the administration of the methane inhibitor and gossypol occurs within a certain time window, i.e. within at most 6 h, preferably within 3 h, more preferably within 1 h, such as within 0.5 h. Most preferably, if administered separately, both ingredients are concomitantly administered to the ruminant, e.g. by concomitant addition thereof into the animal's feed (diet) or into the feed rack.

Preferably, in all embodiments of the present invention gossypol and the methane inhibitor are administered together in form of a feed composition or feed additive comprising gossypol and the methane inhibitor.

It is well understood, that in all embodiments of the present invention gossypol and the methane inhibitor are administered to the ruminant in an effective amount, i.e. in an amount which results in a methane reduction, preferably of at least 10 % when compared to control, i.e. to ruminants not supplemented with gossypol and the methane inhibitor.

Thus, the present invention also relates to the (combined) use gossypol and the methane inhibitor, wherein the methane production in ruminants is reduced by at least 10 % compared to control (i.e. in the absence of gossypol and the respective methane inhibitor(s)).

Propanediol mononitrate [CAS No: 100502-66-7] is a known compound which can e.g. be manufactured as outlined in WO2004043898 or WO2012084629 and which is available under the trademark Bovaer^{®} at DSM Nutritional Products Ltd.

Gossypol (CAS No: 303-45-7) exhibits an axial chirality resulting in two enantiomers. Thus, gossypol can be used in the form of each single enantiomer or as a mixture thereof. Furthermore, the term gossypol in all embodiments of the present invention can also be used as gossypol acetic acid solvate (CAS 12542-36-8). Preferably in all embodiments of the pre-sent invention gossypol is used in the form of an enantiomeric mixture, i.e. as (±) gossypol. Said gossypol is e.g. commercially available as (±)-Gossypol from cotton seeds from Sigma-Aldrich in ≥95% (HPLC).

In one preferred embodiment of the present invention, Gossypol is used as such (i.e. as single chemical compound) or in the form of (±)-Gossypol-acetic acid solvate according to the pre-sent invention, both compounds being available from Merck. Particularly preferred in all embodiments according to the present invention is the use of gossypol acetic acid solvate obtainable as (±)-Gossypol-acetic acid.

In another preferred embodiment, gossypol is used/ administered in the form of a plant product comprising gossypol in all embodiments of the present invention. Said plant products are well known to a person skilled in the art and e.g. commonly used as cost-effective premier feedstuff for lactating cows and other ruminants. The gossypol content of such plant products may amount up to about 6%. Commonly, however, the gossypol content of said plant products is in the range of about 50 to 10,000 ppm.

The term 'an effective amount' as used herein refers to an amount necessary to obtain a reduction of the methane emissions resulting from the digestive activities of a ruminant. It is well understood, that said reduction may be achieved by one single (daily) dose or by repeated (daily) doses. Furthermore, it is well understood by a person skilled in the art, that the effective amount of gossypol and the methane inhibitor in the uses, methods and compositions according to the invention may vary depending upon known factors, such as the characteristics of the particular composition and its mode and route of administration, the methane inhibitor content of the respective plant product or essential oil mixtures, the age, health and weight of the ruminant, the frequency of treatment, all of which can be determined by the expert in the field with normal trials or with the usual considerations regarding the intake regime and/ or the formulation.

In all embodiments of the present invention, the effective amount of the methane inhibitor to be administered to the ruminants is selected in the range from 0.01 to 100 g methane inhibitor/ animal/ day, more preferably in the range from 0.01 to 50 g methane inhibitor/ animal/ day, most preferably in the range from 0.01 to 25 g methane inhibitor/ animal/ day, such as in the range from 0.01 to 10 g methane inhibitor/ animal/ day, 0.01 to 5 g methane inhibitor/ animal/ day or 0.01 to 2.5 g methane/ animal/ day.

Preferably, in all embodiments of the present invention, the effective amount of propanediol mononitrate to be administered to the ruminants is selected in the range from 0.05 to 5 g PDMN/ animal/ day, more preferably in the range from 0.1 to 4 g PDMN/ animal/ day, most preferably in the range from 0.25 to 3 g PDMN/ animal/ day. Further suitable effective amounts are selected in the range from 0.5 to 3 g PDMN/ animal/ day, from 1 to 3 g PDMN/ animal/ day or from 1 to 2 g PDMN/ animal/ day.

With regard to the feed, preferably, in all embodiments of the present invention, the effective amount of propanediol mononitrate in the feed is selected in the range from 10 mg to 300 mg PDMN/ kg DM/ day, more preferably in the range from 50 to 150 g PDMN/ kg DM/ day, most preferably in the range from 60 to 100 g PDMN/ kg DM/ day.

In all embodiments of the present invention, the effective amount of gossypol to be administered to the ruminants is selected in the range from 0.05 to 100 g gossypol/ animal/ day, more preferably in the range from 0.1 to 50 g gossypol/ animal/ day, most preferably in the range from 0.2 to 25 g gossypol/ animal/ day, such as in the range from 0.2 to 10 g gossypol/ animal/ day, 0.2 to 5 g gossypol/ animal/ day or 0.2 to 2.5 g gossypol/ animal/ day.

With respect to cattle, further particularly suitable ranges are in the range from 0.2 to 100 g gossypol/ animal/ day, more preferably in the range from 0.5 to 90 g gossypol/ animal/ day, most preferably in the range from 1 to 90 g gossypol/ animal/ day, such as in the range from 1 to 50 g gossypol/ animal/ day, 1 to 25 g gossypol/ animal/ day or 2 to 25 g gossypol/ animal/ day.

In all embodiments of the present invention, it is furthermore advantageous if the molar ratio of gossypol to the methane inhibitor (i.e. mole gossypol/ mole methane inhibitor) is comprised between 100 and 0.1 (e.g. from 100 µM gossypol/1 µM methane inhibitor to 1 µM gossypol/ 10 µM methane inhibitor), preferably between 75 to 0.25, most preferably between 60 to 0.35 such as in the range of 50 to 0.5. Further suitable ranges encompass 50:1 to 1:5, 20:1 to 1:5, 20:1 to 3:1, 15:1 to 1:2.5 as well as 10:1 to 1:2.

In all embodiments of the present invention, the methane inhibitor is propanediol mononitrate (PDMN).

In all embodiments of the present invention, propanediol mononitrate is preferably administered in the form of a powderous formulation thereof.

Preferably, said powderous formulation is a powderous formulation comprising PDMN and a carrier material. Suitable carrier includes any carrier well known in the food and feed industry such as silicone dioxide (silica) without being limited thereto.

Powderous formulations comprising PDMN and a carrier material are usually prepared by PDMN being sprayed onto or admixed with the carrier material by standard methods in the art, e.g. by diluting PDMN in an organic solvent suitable for the preparation of food or feed products such as e.g. dichloromethane, spraying or admixing said solution with/ onto the carrier followed by evaporation of the organic solvent.

Alternatively, PDMN can be diluted in a suitable edible oil before being sprayed onto or admixed with the carrier material. In the latter cases the respective edible oil is generally not removed. The powderous formulation may in addition contain usual additives used in the preparation of powderous formulations for feed application.

The amount of PDMN in the powderous formulation according to the present invention is preferably selected in the range of 1 to 20 wt.-%, preferably in the range of 2 to 15 wt.-%, most preferably in the range of 4 to 12 wt.-%, based on the total weight of the composition.

Particularly suitable powderous formulation to be used in all embodiments of the present invention consists essentially of PDMN, propylene glycol and silica as e.g. outlined in WO2018149756 and WO2018149755 and are commercially available as Bovaer^{®} 10 from DSM Nutritional Products Ltd.

Gossypol and the methane inhibitor in all uses and methods according to the present invention are preferably administered concomitantly to the ruminant, either by prior admixing thereof or by separate addition to the diet of the animal.

Gossypol and the methane inhibitor are preferably administered via a (ruminant) feed composition or feed additive to the ruminant, e.g. by admixing the individual components with the ruminant's feed.

Thus, preferably, in all uses and methods according to the present invention the methane inhibitor as well as gossypol with all the definitions and preferences as given herein are administered to the ruminant incorporated into a (ruminant) feed composition or feed additive.

The term feed composition or feed additive as used herein means any preparation, mixture, or composition suitable for, or intended for oral intake by an animal. Exemplary feed for ruminants such as cows include forage (grass, legumes, silage), hay, grass, grain as well as soy without being limited thereto.

Said feed compositions or feed additives may be prepared by methods known per se in the art of feed formulation and processing.

Said feed compositions and feed additives are still novel. Thus, further aspects of the present invention are (ruminant) feed compositions and feed additives comprising gossypol and the methane inhibitor with all the definitions and preferences as given herein.

In one preferred embodiment, the feed compositions and feed additives are a mineral premix, a vitamin premix including vitamins and optionally minerals or a bolus.

Gossypol and the methane inhibitor may be used in combination with conventional ingredients present in an animal feed composition (diet) such as forages (raw, grass, hay, silages), coproducts from industry (citrus pulp, soybean hulls, distillers dried or wet grains with solubles, minerals (calcium carbonates, electrolytes such as ammonium chloride, macro and trace minerals and in all forms, inorganic and organic), proteins such as soya bean meal, sunflower meal, meat and bone meal, fish meal, amino acids and others, energy ingredients such as grains, wheat, starch, barley, millet, sorghum, corn, animal and plants fat or oils, and vitamins without being limited thereto.

Particular examples of feed compositions of the invention are the following:
- An animal feed additive comprising (a) the methane inhibitor and (b) gossypol and (c) one or more of (c-1) fat-soluble vitamin(s), (c-2) water-soluble vitamin(s), (c-3) trace mineral(s) and (c-4) macro mineral(s);
- An animal feed composition comprising (a) propanediol mononitrate and (b) the mixture of the at least six phenolic substances and (c) one or more of (c-1) a crude protein content of 50 to 800 g/kg feed (50-80%), (c-2) fat from 5 - 100 g/kg feed (5-10%), (c-3) NDF from 150 - 700 g/kg feed (15-70%), (c-4) TDN from 300 - 800 (30 - 80%) and (c-5) starch from 150 - 700 g/kg feed (15 - 70%).

The so-called premixes are examples of animal feed additives of the invention. A premix designates a preferably uniform mixture of one or more micro-ingredients with diluents and/or carrier. Premixes are used to facilitate uniform dispersion of micro-ingredients in a larger mix.

Apart from the active ingredients of the invention (i.e. gossypol and the methane inhibitor), the premix of the invention preferably contains at least one fat-soluble vitamin, and/or at least one water soluble vitamin, and/or at least one trace mineral, and/or at least one macro mineral. In other words, the premix of the invention comprises the methane inhibitor and gossypol together with at least one additional component selected from the group consisting of fat-soluble vitamins, water-soluble vitamins, trace minerals, and macro minerals.

Macro minerals may be separately added to the feed. Therefore, in a particular embodiment, the premix comprises gossypol and the methane inhibitor with at least one additional component selected from the group consisting of fat-soluble vitamins, water-soluble vitamins, and trace-minerals.

The following are non-exclusive lists of examples of these components:
- Examples of fat-soluble vitamins are vitamin A, vitamin D3, vitamin E, and vitamin K, e.g. vitamin K3.
- Examples of water-soluble vitamins are vitamin B12, biotin and choline, vitamin B1, vitamin B2, vitamin B6, niacin, folic acid and panthothenate, e.g. Ca-D-panthothenate.
- Examples of trace minerals are manganese, zinc, iron, copper, iodine, selenium, manganese, and cobalt.
- Examples of macro minerals are calcium, phosphorus, potassium, magnesium and sodium.

As regards feed compositions for ruminants such as cows, as well as ingredients thereof, the ruminant diet is usually composed of an easily degradable fraction (named concentrate) and a fiber-rich less readily degradable fraction (named hay, forage, or roughage).

Hay is made of dried grass, legume or whole cereals. Grasses include among others temperate or tropical grasses, timothy, ryegrasses, fescues, brachiaria, panicum, tifton. Legumes include among others clover, lucerne or alfalfa, peas, beans and vetches. Whole cereals include among others barley, maize (corn), oat, wheat, sorghum. Other forage crops include sugarcane, sugarcane bagasse, citrus pulp, kales, rapes, and cabbages. Also root crops such as turnips, swedes, mangles, fodder beet, and sugar beet (including sugar beet pulp and beet molasses) are used to feed ruminants. Still further crops are tubers such as potatoes, cassava and sweet potato. Silage is an ensiled version of the fiber-rich fraction (e.g. from grasses, legumes or whole cereals) and grains (e.g. high moisture corns silage) whereby material with a high water content is treated with a controlled anaerobic fermentation process (naturally-fermented or additive treated) without being limited thereto.

Concentrate feed is largely made up of cereals grains (such as barley including brewers grain and distillers grain, maize, wheat, sorghum), but also often contain protein-rich feed ingredients such as soybean meal, rapeseed meal, palm kernel and sunflower meal without being limited thereto.

Ruminants (males, females and in all growth stages and adults) may also be fed total mixed rations (TMR), where all the dietary components, e.g. forage, silage, other feed ingredients and concentrate, are mixed before serving.

As mentioned above a premix is an example of a feed additive which may comprise gossypol and the methane inhibitor. It is understood that the compounds may be administered to the animal in different other forms. For example the compounds can also be included in a bolus that would be placed in the rumen and that would release a defined amount of the active compounds continuously in well-defined dosages over a specific period of time.

In a particular advantageous embodiment the feed composition according to the present invention is a ruminant feed (often also referred to as ruminant diet) where all the dietary components, e.g. macro and micro ingredients, forage, silage and concentrate feed and additives including gossypol and the methane inhibitor are included. Such ruminant feed or diet is also often referred to as total mixed ration (TMR) or Partial mixed ration (PMR) or nutritional supplement for grazing animals.

Preferably, in all embodiments of the present invention, in said ruminant feed the amount of the propanediol mononitrate is selected in the range from about 10 mg to about 1 g per Kg dry matter feed, most preferably from 20 mg to 500 mg per Kg of dry matter feed, such as from about 20 mg to 250 mg per Kg of dry matter feed, or even mor preferably from 10 mg to 300 mg per dry matter kg feed such as in the range from 50 mg to 150 mg per kg dry matter feed or 60 mg to 100 mg per kg dry matter feed.

Preferably, in all embodiments of the present invention, in said ruminant feed the amount of gossypol is selected in the range from 25 mg to about 10 g gossypol per kg dry matter feed, preferably from about 50 mg to about 10 g of gossypol per kg dry matter feed, more preferably 50 mg to about 5 g gossypol per Kg dry matter feed, most preferably from 100 mg to 2.5 g gossypol per Kg of dry matter feed. Further particular suitable ranges are from 25 mg to 1 g gossypol per Kg of dry matter feed, 50 mg to 1 g gossypol per Kg of dry matter feed or 100 mg to 1 g gossypol per Kg of dry matter feed.

Daily dry matter intake for cattle is generally in the range of 1 to 3.5 % of dry matter per kg live weight. The amount of dry matter intake (DMI) for dairy cows is, for example, about 2-3 % dry matter per kg live weight, the amount of dry matter intake for beef cattle is generally between 1.0 - 3% of live weight depending on the feeding system as feedlot or grazing.

It is also well understood that in all uses and methods according to the present invention gossypol and the methane inhibitor have to be supplemented timely together to excerpt the synergistic effect, can however been added separately to the diet of the animal, e.g. can be added separately into the respecting feeding rack.

Thus, the present invention relates to a method of supplementing gossypol and a methane inhibitor to a ruminant, said method encompassing the step of adding gossypol and the methane inhibitor with all the definitions and preferences as given herein concomitantly to a feed rack.

The amount of ruminant feed administered to a ruminant may vary dependent on the kind and age. Generally, the amount of dry matter fed to beef cattle or dairy cows is preferably selected in the range of 1.5% to 3.5% of live weight, such as for an animal of 500 kg of live weigh it means to feed 7.5 to 17.5 kg dry matter/d.

In all embodiments of the present invention, it is to be understood by oral administration, a simple feeding, or manual administration of a bolus. It is also well understood, that the methane inhibitor and the gossypol can be pre-mixed before the administration or can be added separately to the animal feed compositions and feed additives.

Methane emission by ruminants can easily be measured in individual animals in metabolic chambers by methods known in the art (Grainger et al., 2007 J. Dairy Science; 90: 2755-2766). Moreover, it can also be assessed at barn level by an emerging technology using laser beam (McGinn et al., 2009, Journal of Environmental Quality; 38: 1796-1802) or Sulfur hexafluoride or just SF6 or GreenFeed system. Alternatively, methane produced by a dairy ruminant can also be assessed by measurement of fatty acid profiles in milk according to WO 2009/156453.

Ruminating mammals according to the present invention include cattle, goats, sheep, giraffes, American Bison, European bison, yaks, water buffalo, deer, camels, alpacas, llamas, wildebeest, antelope, pronghorn, and Nilgai.

For all embodiments of the present invention, domestic cattle, sheep and goat are the more preferred species. For the present purposes most preferred species are domestic cattle. The term includes all races of domestic cattle, and all production kinds of cattle, in particular dairy cows and beef cattle. It is well understood, that the term dairy cows and beef cattle encompasses animals in all ages and physiological stage of life and production systems such as confined, semi-confined and grazing.

In further embodiments, the present invention relates to the use of gossypol to synergistically enhance the methane reducing properties of a methane inhibitor in ruminants. It is well understood that all the definitions and properties as defined herein also apply to said use.

The present invention is further described by the following examples which should not be construed as limiting the scope of the invention.

### Examples

*In vitro test for methane production:* A modified version of the "Hohenheim Forage value Test (HFT)" was used for testing the effect of specific compounds on the rumen functions mimicked by this in-vitro system.

*Principle:* Feed is gadded into a syringe with a composition of rumen liquor and an appropriate mixture of buffers. The solution is incubated at 39°C. After 8 hours the quantity (and composition) of gas phase produced is measured and put into a formula for conversion.

### Reagents:

### Mass element solution:

- 6.2 g potassium dihydrogen phosphate (KH₂PO₄)
- 0.6 g magnesium sulfate heptahydrate (MgSO₄ * 7H₂O)
- 9 ml concentrated phosphoric acid (1 mol/l)
- dissolved in distilled water to 1 l (pH about 1.6)

### Buffer solution:

- 35.0 g sodium hydrogen carbonate (NaHCO₃)
- 4.0 g ammonium hydrogen carbonate ((NH₄)HCO₃)
- dissolved in distilled water to 1 l

### Trace element solution:

- 13.2 g calcium chloride dihydrate (CaCl₂ * 2H₂O)
- 10.0 g manganese(ll) chloride tetrahydrate (MnCl₂ * 4H₂O)
- 1.0 g cobalt(II) chloride hexahydrate (CoCl₂ * 6H₂O)
- 8.0 g iron(lll) chloride (FeCl₃ * 6H₂O)
- dissolved in distilled water to 100 ml

### Sodium salt solution:

- 100 mg sodium salt
- dissolved in distilled water to 100 ml

### Reduction solution:

- first 3 ml sodium hydroxide (c = 1 mol/l), then 427.5 mg sodium sulfide hydrate (Na₂S * H₂O) are added to 71.25 ml H₂O
- solution must be prepared shortly before it is added to the medium solution

### Procedure:

*Sample weighing:* The feed stuff (i.e. TMR (44 % concentrate, 6 % hay, 37 % maize silage and 13 % grass silage) is sieved to 1 mm and weighed exactly into 64 syringes. 4 of these syringes are the substrate controls, which display the gas production without the effect of the tested compounds. 4 other syringes are positive control (3-NOP, 10 µM). When needed, 4 syringes contain a carrier control (if the test compounds need a carrier). The remaining syringes contain the test substances, by groups of 4 syringes, in the amounts as indicated in table 1.

### Preparation of the medium solution:

The components are mixed in a Woulff bottle in following order:
- 711 ml water
- 0.18 ml trace element solution
- 355.5 ml buffer solution
- 355.5 ml mass element solution
The completed solution is warmed up to 39 °C followed by the addition of 1.83 ml sodium salt solution and the addition of reduction solution at 36 °C. The rumen liquor is added, when the indicator turns colourless.

*Extraction of the rumen liquor:* 750 ml of rumen liquor are added to approximately 1,400 ml of medium solution under continued agitation and CO₂-gassing.

*Filling the syringes, incubation and determining gas volumes and VFA values:* The diluted rumen fluid (24 ml) is added to the glass syringe. The syringes are then incubated for 8 hours at 39 °C under gentle agitation. After 8 hours, the volume of gas produced is measured, and the percentage of methane in the gas phase is determined by gas chromatography.

### Results

The food fermented was artificial TMR (44 % concentrate, 6 % hay, 37 % maize silage and 13 % grass silage). Gossypol was obtained from Sigma-Aldrich (G8761), and used at a concentration as outlined in table 1. 3-Nitrooxy-propanol (3-NOP) was used at the concentration as outlined in table 1.

The results are presented in the following Table 1. Clear synergistic effects were obtained for the methane reduction when propanediol mononitrate was combined with gossypol, which translates into additional performance benefit for the animal.

**Table 1: Effect on Methane production resulting from the average of four to eight experiments with either gossypol (G), propanediol mononitrate (3-NOP), or combination of both.**

| # | 3-NOP [µM] | G [µM] | Total methane change [% vs. control] | | Synergy [%] | Ratio [G/3-NOP] |
|---|---|---|---|---|---|---|
| | | | expected* | found | | |
| 1 (Control) | - | - | - | - | - | |
| 2 (Positive control) | 10 | - | - | -98 | - | |
| 3 (Ref) | 5 | - | - | -54 | - | |
| 4 (Ref) | 2.5 | - | - | -12 | - | |
| 5 (Ref) | - | 100 | - | -69 | - | |
| 6 (Ref) | - | 20 | - | -15 | - | |
| 7 (Ref) | - | 10 | - | -11 | - | |
| 8 (Ref) | - | 5 | - | -1 | - | |
| 9 (Inv) | 2.5 | 100 | -81 | -98 | + 21 | 40:1 |
| 10 (Inv) | 5 | 20 | -69 | -95 | + 38 | 4:1 |
| 11 (Inv) | 2.5 | 20 | -27 | -46 | + 70 | 8:1 |
| 12 (Inv) | 5 | 5 | -55 | -90 | + 63 | 1:1 |
| 13 (Inv) | 5 | 2.5 | -54 | -89 | + 65 | 1:2 |
| 14 (Inv) | 2.5 | 5 | -13 | -19 | + 46 | 2:1 |

| | | | | | | |
|---|---|---|---|---|---|---|
| *expected = sum of individual contribution of gossypol and PDMN ^{#}synergy = found/expected *100% | | | | | | |

**Table 2: Correlation of in vitro data to respective dosage/ feeding regime**

| # | 3-NOP [µM] | G [µM] | Dosage^{§} [g/animal/d] | Dosage° [g/kg feed] |
|---|---|---|---|---|
| 2 (Positive control) | 10 | - | 2 | 0.1 |
| 3 (Ref) | 5 | - | 1 | 0.05 |
| 4 (Ref) | 2.5 | - | 0.5 | 0.03 |
| 5 (Ref) | - | 100 | 86 | 4.3 |
| 6 (Ref) | - | 20 | 17 | 0.9 |
| 7 (Ref) | - | 10 | 9 | 0.4 |
| 8 (Ref) | - | 5 | 4 | 0.2 |

| | | | | |
|---|---|---|---|---|
| ^{§}based on correlation of in vitro/ in vivo data °based on the respective average feed intake per animal/day | | | | |

## Claims

1. Use of gossypol and a methane inhibitor for reducing the formation of methane emanating from the digestive activities of ruminants, wherein the methane inhibitor is propanediol mononitrate and wherein the methane inhibitor is administered to the ruminant in an amount selected in the range from 0.01 to 100 g methane inhibitor/ animal/ day and gossypol is administered to the ruminant in an amount selected in the range from 0.05 to 100 g gossypol/ animal/ day.

2. The use according to claim 1, wherein the methane inhibitor is administered to the ruminant in an amount selected in the range from 0.01 to 50 g methane inhibitor/ animal/ day, most preferably in the range from 0.01 to 25 g methane inhibitor/ animal/ day.

3. The use according to claim 1 or 2, wherein gossypol is administered to the ruminant in an amount selected in the range from 0.1 to 50 g gossypol/ animal/ day, most preferably from 0.2 to 25 g gossypol/ animal/ day.

4. The use according to any of the preceding claims, wherein the molar ratio of gossypol to the methane inhibitor is comprised between 100 and 0.1, preferably between 75 to 0.25, more preferably between 60 to 0.35, most preferably between 50 to 0.5.

5. The use according to any one of the preceding claims, wherein the ruminant animal is selected from the group consisting of domestic cattle, most preferably from beef cattle or dairy cows.

6. A method for reducing the production of methane emanating from the digestive activities of ruminants, said method comprising orally administering to the ruminant an effective amount of gossypol and a methane inhibitor, wherein the methane inhibitor is propanediol mononitrate and wherein the effective amount of the methane inhibitor is selected in the range 0.01 to 100 g methane inhibitor/ animal/ day and the effective amount of gossypol is selected in the range from 0.05 to 100 g gossypol/ animal/ day.

7. The method according to claim 6, wherein the effective amount of the methane inhibitor is selected in the range from 0.01 to 50 g methane inhibitor/ animal/ day, most preferably in the range from 0.01 to 25 g methane inhibitor/ animal/ day.

8. The method according to claim 6 or 7, wherein the effective amount of gossypol is selected in the range from 0.1 to 50 g gossypol/ animal/ day, most preferably from 0.02 to 25 g gossypol/ animal/ day.

9. A feed composition or feed additive comprising gossypol and a methane inhibitor, wherein the feed composition is a ruminant feed comprising gossypol in an amount selected in the range from 25 mg to about 10 g gossypol per kg dry matter feed and the methane inhibitor in an amount selected in the range from 1 mg to 5 g methane inhibitor per kg dry matter feed and wherein the methane inhibitor is propanediol mononitrate.

10. The ruminant feed according to claim 9, wherein the molar ratio of gossypol to the methane inhibitor is comprised between 100 and 0.1, preferably between 75 to 0.25, more preferably between 60 to 0.35, most preferably between 50 to 0.5.

11. The feed composition according to claim 9, wherein the feed composition is a mineral premix, a vitamin premix or a bolus.

12. Use of gossypol to enhance the methane reducing properties of a methane inhibitor in ruminants, wherein the methane inhibitor is propanediol mononitrate.

13. Use according to claim 12, wherein the molar ratio of gossypol to the methane inhibitor is comprised between 100 and 0.1, preferably between 75 to 0.25, more preferably between 60 to 0.35, most preferably between 50 to 0.5.

## Patentansprüche

1. Verwendung von Gossypol und einem Methanhemmer zur Verringerung der Bildung von Methan, das aus den Verdauungsaktivitäten von Wiederkäuern hervorgeht, wobei es sich bei dem Methanhemmer um Propandiolmononitrat handelt und wobei dem Wiederkäuer der Methanhemmer in einer Menge, die im Bereich von 0,01 bis 100 g Methanhemmer/Tier/Tag ausgewählt ist, und Gossypol in einer Menge, die im Bereich von 0,05 bis 100 g Gossypol/Tier/Tag ausgewählt ist, verabreicht wird.

2. Verwendung nach Anspruch 1, wobei der Methanhemmer dem Wiederkäuer in einer Menge verabreicht wird, die im Bereich von 0,01 bis 50 g Methanhemmer/Tier/Tag, am meisten bevorzugt im Bereich von 0,01 bis 25 g Methanhemmer/Tier/Tag, ausgewählt ist.

3. Verwendung nach Anspruch 1 oder 2, wobei Gossypol dem Wiederkäuer in einer Menge verabreicht wird, die im Bereich von 0,1 bis 50 g Gossypol/Tier/Tag, am meisten bevorzugt von 0,2 bis 25 g Gossypol/Tier/Tag ausgewählt ist.

4. Verwendung nach einem der vorhergehenden Ansprüche, wobei das Molverhältnis von Gossypol zum Methanhemmer zwischen 100 und 0,1, bevorzugt zwischen 75 und 0,25, bevorzugter zwischen 60 und 0,35, am meisten bevorzugt zwischen 50 und 0,5 liegt.

5. Verwendung nach einem der vorhergehenden Ansprüche, wobei der Wiederkäuer aus der Gruppe bestehend aus Hausrindern, am meisten bevorzugt aus Fleischrindern oder Milchkühen ausgewählt ist.

6. Verfahren zur Verringerung der Erzeugung von Methan, das aus den Verdauungsaktivitäten von Wiederkäuern hervorgeht, wobei das Verfahren orales Verabreichen einer wirksamen Menge an Gossypol und einem Methanhemmer an den Wiederkäuer umfasst, wobei es sich bei dem Methanhemmer um Propandiolmononitrat handelt und wobei die wirksame Menge des Methanhemmers im Bereich 0,01 bis 100 g Methanhemmer/Tier/Tag und die wirksame Menge an Gossypol im Bereich von 0,05 bis 100 g Gossypol/Tier/Tag ausgewählt ist.

7. Verfahren nach Anspruch 6, wobei die wirksame Menge des Methanhemmers im Bereich von 0,01 bis 50 g Methanhemmer/Tier/Tag, am meisten bevorzugt im Bereich von 0,01 bis 25 g Methanhemmer/Tier/Tag, ausgewählt ist.

8. Verfahren nach Anspruch 6 oder 7, wobei die wirksame Menge an Gossypol im Bereich von 0,1 bis 50 g Gossypol/Tier/Tag, am meisten bevorzugt von 0,02 bis 25 g Gossypol/Tier/Tag ausgewählt ist.

9. Futtermittelzusammensetzung oder Futtermittelzusatz, umfassend Gossypol und einen Methanhemmer, wobei es sich bei der Futtermittelzusammensetzung um ein Wiederkäuerfutter handelt, das Gossypol in einer Menge, die im Bereich von 25 mg bis etwa 10 g Gossypol pro kg Futtertrockenmasse ausgewählt ist, und den Methanhemmer in einer Menge, die im Bereich von 1 mg bis 5 g Methanhemmer pro kg Futtertrockenmasse ausgewählt ist, umfasst, und wobei es sich bei dem Methanhemmer um Propandiolmononitrat handelt.

10. Wiederkäuerfutter nach Anspruch 9, wobei das Molverhältnis von Gossypol zum Methanhemmer zwischen 100 und 0,1, bevorzugt zwischen 75 und 0,25, bevorzugter zwischen 60 und 0,35, am meisten bevorzugt zwischen 50 und 0,5 liegt.

11. Futtermittelzusammensetzung nach Anspruch 9, wobei es sich bei der Futtermittelzusammensetzung um eine Mineralstoffvormischung, eine Vitaminvormischung oder einen Bolus handelt.

12. Verwendung von Gossypol zur Verbesserung der methanreduzierenden Eigenschaften eines Methanhemmers bei Wiederkäuern, wobei es sich bei dem Methanhemmer um Propandiolmononitrat handelt.

13. Verwendung nach Anspruch 12, wobei das Molverhältnis von Gossypol zum Methanhemmer zwischen 100 und 0,1, bevorzugt zwischen 75 und 0,25, bevorzugter zwischen 60 und 0,35, am meisten bevorzugt zwischen 50 und 0,5 liegt.

## Revendications

1. Utilisation de gossypol et d'un inhibiteur de méthane pour réduire la formation de méthane émanant des activités digestives de ruminants, dans laquelle l'inhibiteur de méthane est le mononitrate de propanediol et dans laquelle l'inhibiteur de méthane est administré au ruminant en une quantité choisie dans la plage de 0,01 à 100 g d'inhibiteur de méthane/animal/jour et le gossypol est administré au ruminant en une quantité choisie dans la plage de 0,05 à 100 g de gossypol/animal/jour.

2. Utilisation selon la revendication 1, dans laquelle l'inhibiteur de méthane est administré au ruminant en une quantité choisie dans la plage de 0,01 à 50 g d'inhibiteur de méthane/animal/jour, tout particulièrement dans la plage de 0,01 à 25 g d'inhibiteur de méthane/animal/jour.

3. Utilisation selon la revendication 1 ou 2, dans laquelle le gossypol est administré au ruminant en une quantité choisie dans la plage de 0,1 à 50 g de gossypol/animal/jour, tout particulièrement de 0,2 à 25 g de gossypol/animal/jour.

4. Utilisation selon l'une quelconque des revendications précédentes, dans laquelle le rapport molaire du gossypol sur l'inhibiteur de méthane est compris entre 100 et 0,1, de préférence entre 75 et 0,25, plus préférablement entre 60 et 0,35, de manière préférée entre toutes entre 50 et 0,5.

5. Utilisation selon l'une quelconque des revendications précédentes, dans laquelle l'animal ruminant est choisi dans le groupe constitué par le bétail domestique, de manière tout particulièrement préférée parmi les bovins de boucherie ou les vaches laitières.

6. Procédé pour réduire la production de méthane émanant des activités digestives de ruminants, ledit procédé comprenant l'administration par voie orale au ruminant d'une quantité efficace de gossypol et d'un inhibiteur de méthane, dans lequel l'inhibiteur de méthane est le mononitrate de propanediol et dans lequel la quantité efficace de l'inhibiteur de méthane est choisie dans la plage de 0,01 à 100 g d'inhibiteur de méthane/animal/jour et la quantité efficace de gossypol est choisie dans la plage de 0,05 à 100 g de gossypol/animal/jour.

7. Procédé selon la revendication 6, dans lequel la quantité efficace de l'inhibiteur de méthane est choisie dans la plage de 0,01 à 50 g d'inhibiteur de méthane/animal/jour, de préférence encore dans la plage de 0,01 à 25 g d'inhibiteur de méthane/animal/jour.

8. Procédé selon la revendication 6 ou 7, dans lequel la quantité efficace de gossypol est choisie dans la plage de 0,1 à 50 g de gossypol/animal/jour, de manière préférée entre toutes de 0,02 à 25 g de gossypol/animal/jour.

9. Composition alimentaire pour animaux ou additif alimentaire pour animaux comprenant du gossypol et un inhibiteur de méthane, dans laquelle la composition alimentaire pour animaux est un aliment pour ruminants comprenant du gossypol en une quantité choisie dans la plage de 25 mg à environ 10 g de gossypol par kg de matière sèche d'aliment pour animaux et l'inhibiteur de méthane en une quantité choisie dans la plage de 1 mg à 5 g d'inhibiteur de méthane par kg de matière sèche d'aliment pour animaux et dans laquelle l'inhibiteur de méthane est le mononitrate de propanediol.

10. Aliment pour ruminants selon la revendication 9, dans lequel le rapport molaire du gossypol sur l'inhibiteur de méthane est compris entre 100 et 0,1, de préférence entre 75 et 0,25, plus préférablement entre 60 et 0,35, de manière préférée entre toutes entre 50 et 0,5.

11. Composition alimentaire selon la revendication 9, dans laquelle la composition alimentaire est un prémélange de minéraux, un prémélange de vitamines ou un bolus.

12. Utilisation de gossypol pour améliorer les propriétés de réduction de méthane d'un inhibiteur de méthane chez des ruminants, dans laquelle l'inhibiteur de méthane est le mononitrate de propanediol.

13. Utilisation selon la revendication 12, dans laquelle le rapport molaire du gossypol sur l'inhibiteur de méthane est compris entre 100 et 0,1, de préférence entre 75 et 0,25, de manière plus préférée entre 60 et 0,35, de manière préférée entre toutes entre 50 et 0,5.
